(19) Europäisches Patentamt
European Patent Office
Office européen des brevets

(11) Veröffentlichungsnummer : **0 054 629**
**B1**

(12) **EUROPÄISCHE PATENTSCHRIFT**

(45) Veröffentlichungstag der Patentschrift : **08.02.84**

(51) Int. Cl.³ : **B 65 D 51/28**, B 65 D 81/26

(21) Anmeldenummer : **81107632.2**

(22) Anmeldetag : **25.09.81**

# (54) Sicherheitsvorrichtung für Emballagen, welche Wasserstoff abgebende pyrophore Metallkatalysatoren enthalten.

(30) Priorität : **20.10.80 DE 3039528**

(43) Veröffentlichungstag der Anmeldung : **30.06.82 Patentblatt 82/26**

(45) Bekanntmachung des Hinweises auf die Patenterteilung : **08.02.84 Patentblatt 84/06**

(84) Benannte Vertragsstaaten : **BE DE FR GB IT NL**

(56) Entgegenhaltungen :
**DE-C- 128 519**
**FR-A- 410 021**
**FR-A- 1 494 756**
**NL-A- 6 507 096**
**US-A- 2 493 861**

(73) Patentinhaber : **Degussa Aktiengesellschaft**
**Weissfrauenstrasse 9**
**D-6000 Frankfurt am Main 1 (DE)**

(72) Erfinder : **Krause, Helmfried**
**Albert-Einstein-Strasse 1**
**D-6458 Rodenbach 1 (DE)**
Erfinder : **Wobbermin, Hubertus**
**Robert-Mayer-Strasse 33**
**D-6000 Frankfurt 90 (DE)**
Erfinder : **Geigle, Edgar, Dr.**
**Ludwigstrasse 11**
**D-8755 Alzenau (DE)**

**EP 0 054 629 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Sicherheitsvorrichtung für Emballagen, welche Wasserstoff abgebende pyrophore Metallkatalysatoren enthalten

Die Erfindung betrifft eine Sicherheitsvorrichtung für Emballagen, welche Wasserstoff abgebende pyrophore Metallkatalysatoren enthalten.

Lagerung und Versand von in Wasser suspendierten pyrophoren Metallkatalysatoren, wie Nickel oder Eisen nach Raney, erfordern die Verwendung von Gebinden, welche dafür eingerichtet sind, den fortwährend infolge Nachreaktion von im Katalysator enthaltenem restlichen Aluminium mit dem Suspendiermittel entwickelten Wasserstoff entweichen zulassen, um einen gefährlichen Druckanstieg im Gebinde zu verhindern. Dafür werden im allgemeinen Einwegventile an einem geeigneten Anbringungsort vorgesehen.

Eine besondere Problematik entsteht jedoch, wenn solche Gebinde in größerer Stückzahl in Containern oder anderen verschlossenen Räumen gelagert oder transportiert werden sollen, weil erfahrungsgemäß der entweichende Wasserstoff nicht in ausreichendem Maße durch Undichtigkeiten abdiffundiert, sondern sich zu explosionsgefährlichen Konzentrationen anreichert. So liegt die untere Zündgrenze für ein $H_2$/Luft-Gemisch schon bei 4 Vol.% Wasserstoff, die Zündtemperatur bei 560 °C. Dadurch besteht insbesondere beim Transport von pyrophore Metallkatalysatoren enthaltenden überdruckgesicherten Fässern in geschlossenen Containern, wie z. B. Überseecontainern, immer die Möglichkeit der Ausbildung eines explosionsfähigen Gasgemisches.

Im Gebrauch waren schon Gebindestopfen, bestehend aus einem hohlen, oben offenen Stopfen, insbesondere einem mit Dichtung versehenen Schraubstopfen, in dessen Boden ein Ventilsystem zur Überdruckentlastung angeordnet ist.

Gegenstand der Erfindung ist daher eine Sicherheitsvorrichtung für Emballagen, welche Wasserstoff abgebende pyrophore Metallkatalysatoren enthalten und aus einem hohlen, oben offenen Stopfen, insbesondere einem mit Dichtung versehenen Schraubstopfen, in dessen Boden ein Ventilsystem zur Überdruckentlastung angeordnet ist, bestehen und welche dadurch gekennzeichnet ist, daß der Hohlraum des Stopfens mit einem Katalysator zur Rekombination von Wasserstoff und Luftsauerstoff angefüllt ist und mit einer gasdurchlässigen, mit dem oberen Stopfenrand verbundenen Abdeckung verschlossen ist.

Das Ventilsystem der Sicherheitsvorrichtung kann aus einem pilzförmigen Ventileinsatz aus elastischem Material bestehen, dessen Stiel durch eine Bohrung im Stopfenboden hindurchgeführt ist und unterhalb des Stopfenbodens eine als spannungsaufbauender Anschlag ausgebildete Verdickung aufweist und dessen Hut auf der Oberseite des Stopfenbodens mindestens eine Gasdurchlaßöffnung bedeckt, wobei der Abstand zwischen Verdickung und Hutansatz etwas kleiner ist als die Dicke des Stopfenbodens.

Solche Ventile sind an sich ebenso bekannt wie ihre Anbringung in einem hohlen, oben offenen Schraubstopfen, welcher im Deckel eines Fasses angeordnet ist. Es hat sich jedoch gezeigt, daß gerade ein solches Ventilsystem sich besonders gut für die Sicherheitsvorrichtung gemäß Erfindung eignet.

In weiterer vorteilhafter Ausbildung der Erfindung ist zumindest die Oberseite des Stopfenbodens, besser noch die gesamte Innenwand des Schraubstopfens unterhalb der Katalysatorfüllung mit einer gasdurchlässigen Wärmeschutzfolie abgedeckt. Als besonders geeignet hat sich hierfür eine perforierte Aluminiumfolie erwiesen. Diese Folie läßt den aus dem Ventil austretenden Wasserstoff in das oberhalb befindliche Katalysatorbett hindurch und schützt den Schraubstopfenboden vor der Wärme, welche sich im Katalysatorbett, meist schubweise in Abhängigkeit von der periodischen Öffnung des Überdruckventils, mit Temperaturen bis über 150 °C entwickelt.

Dieser Wärmeschutz ist insbesondere dann von Bedeutung, wenn der Stopfen, entsprechend einer vorzugsweisen Variante der Erfindung, aus thermoplastischem Material und seine oberseitige Abdeckung aus metallischem Siebgewebe besteht, welches in den oberen Stopfenrand eingeschweißt ist.

Zum Schutz der Stopfenabdeckung beim Transport der Gebinde im Freien gegen Regen oder Spritzwasser kann die Abdeckung mit einer Haube geschützt werden, die durch übliche Befestigungsmittel bzw. -maßnahmen so über ihr angebracht ist, daß zumindest ein kleiner Luftspalt bleibt.

Als Katalysator kann grundsätzlich jedes System verwendet werden, welches bei üblichen Umgebungstemperaturen die Umsetzung von Wasserstoff und Luftsauerstoff bewirkt.

So beschreibt z. B. die NL-A-65 07 096 einen geschlossenen Behälter mit einer auf der Innenseite des Deckels angebrachten Katalysatorschicht aus einem Platingruppenmetall, aufgebracht z. B. auf Aluminiumoxid, für die Rekombination von Wasserstoff mit Sauerstoff. Im vorliegenden Fall hat sich ein Einsatz des Katalysators als geformtes Schüttgut als günstig erwiesen, doch kann auch eine pulverförmige Masse oder ein Monolithkatalysator vorgesehen werden.

Im Rahmen der Erfindung haben sich insbesondere Katalysatoren aus einem gamma-Aluminiumoxid-Träger und einer darauf aufgebrachten Platingruppen-Metallkomponente, insbesondere aus Palladium und/oder Platin als vorteilhaft erwiesen, wobei das gamma-Aluminiumoxid eine spezifische Oberfläche von 50-400, vorzugsweise 80-350, insbesondere ca. 250 $m^2/g$ haben sollte.

Die Sicherheitsvorrichtung und ihre Funktion wird nachstehend anhand einer für die Praxis geeigneten Ausführungsform in Verbindung mit

der anliegenden Zeichnung und einem Ausführungsbeispiel mit Vergleichsbeispiel näher erläutert.

Die gezeigte Sicherheitsvorrichtung besteht aus einem käuflichen Stopfenkörper 1 mit Ventilsystem 3, der Katalysatorfüllung 4, der Abdeckung 5, der Wärmeisolierfolie 9 und der Schutzhaube 10.

Der Stopfenkörper 1 aus thermoplastischem Kunststoff ist als Schraubstopfen ausgebildet. Die Dichtung 2 dient der gasdichten Verschraubung des Stopfens mit dem Deckel eines Stahlblechfasses.

Das an sich bekannte Ventilsystem 3 ist kombiniert mit dem Stopfen 1 und hat folgenden Aufbau : Durch eine Bohrung im Stopfenboden 8 ist der Stiel des pilzförmigen, elastischen Ventileinsatzes 6 geführt. Eine Verdickung des Stiels unterhalb des Stopfenbodens 8 hält den Ventileinsatz unter leichter Spannung fest, so daß der Hutrand auf der Oberseite des Stopfenbodens 8 aufliegt und die Gasdurchlaßöffnung 7 abdeckt. Die Wärmeisolierfolie 9, eine perforierte Aluminiumfolie, bekleidet die gesamte Innenwand des Hohlstopfens. Der von der Isolierfolie 9 umschlossene Hohlraum ist mit etwa 10 ml kugelförmigem Katalysator 4 angefüllt. Die Oberseite des Stopfens 1 ist mit einem Maschendrahtgewebe 5 bedeckt, welches in den oberen Stopfenrand eingeschweißt ist. Die Schutzhaube 10 ist bedarfsweise, nämlich wenn mit Regen oder Spritzwasser zu rechnen ist, auf Abstand fest mit dem Stopfenrand verschweißt, vorgesehen.

Der verpackte pyrophore Metallkatalysator, z. B. Nickel nach Raney, entwickelt laufend geringe Mengen von Wasserstoff. Aus einer Katalysatormenge von 50 kg, suspendiert in etwa ebensoviel Wasser werden stündlich etwa 300 ml $H_2$ freigesetzt. Sobald sich in dem mit einem Spannringdeckel gasdicht verschlossenen, mit der beschriebenen Sicherheitsvorrichtung ausgerüsteten Stahlblechfaß ein Überdruck von etwa 500 mm WS aufgebaut hat, öffnet das Pilzventil und läßt Wasserstoff entweichen. Dieser durchströmt die Wärmeisolierfolie und das Katalysatorbett und wird dort unter Wärmeentwicklung mit hinzutretendem Luftsauerstoff katalytisch gemäß

$$H_2 + 1/2\,O_2 \longrightarrow H_2O$$

zu Wasser umgesetzt. Auf diese Weise wird verhindert, daß während des Transports des verpackten pyrophoren Metallkatalysators in einem geschlossenen Container oder während der Lagerung in einem abgeschlossenen Raum so viel Wasserstoff angesammelt wird, daß im Gemisch mit Luft die untere Explosionsgrenze von 4 Vol.% $H_2$ erreicht oder überschritten wird. Die beschriebene Sicherheitsvorrichtung dient also dem gefahrlosen Transport bzw. der gefahrlosen Lagerung Wasserstoff abgebender Metallkatalysatoren, insbesondere des Raney-Typs, kann aber auch bei anderen, sich ähnlich verhaltenden Substanzen Anwendung finden.

Beispiel 1 (Katalysatorversand ohne Sicherheitsvorrichtung)

193 mit Deckel verschlossene Stahlfässer von je 60 l Fassungsvermögen, mit jeweils 50 kg in $H_2O$ suspendiertem Nickel-Katalysator nach Raney (Gewichtsverhältnis Katalysator : $H_2O$ = ca. 1,1) wurden in einem 40-Fuß-Container verstaut. Der Verschlußdeckel jedes Fasses war dabei lediglich mit einem Stopfenkörper mit Pilzventilsystem ausgerüstet. In dem Container wurde durch laufende Messungen die Wasserstoffkonzentration verfolgt. Sie stieg kontinuierlich an und erreichte nach 5 Tagen 3 Vol.% $H_2$, entsprechend 75 % der unteren Zündgrenze (UZG), nach 6 Tagen 3,2 Vol.% (80 % UZG). Der Container konnte zum Versand erst freigegeben werden, nachdem sichergestellt war, daß die Türen regelmäßig alle 2 Tage geöffnet werden, um den gebildeten Wasserstoff entweichen zu lassen.

Beispiel 2 (Katalysatorversand mit Sicherheitsvorrichtung)

Unter den gleichen Versuchsbedingungen, wie in Beispiel 1, aber mit dem Unterschied, daß jedes Katalysatorfaß mit der Sicherheitsvorrichtung gemäß Erfindung versehen war (verwendeter Katalysator : hochdisperses metallisches Palladium, abgeschieden auf $\gamma$-$Al_2O_3$ von 250 $m^2/g$ spezifische Oberfläche — nach BET), wurden nach 5 Tagen 0,9 Vol.% $H_2$ gemessen (22,5 % UZG), die auch nach 6 Tagen unverändert blieben. Damit konnte gezeigt werden, daß die Sicherheitsvorrichtung nicht nur wirksam arbeitete, sondern die $H_2$-Konzentration auf einem so niedrigen Wert hielt, daß der verschlossene Container ohne weitere Sicherheitsauflagen gefahrlos zum Versand gebracht werden konnte.

## Ansprüche

1. Sicherheitsvorrichtung für Emballagen, welche Wasserstoff abgebende pyrophore Metallkatalysatoren enthalten, bestehend aus einem hohlen, oben offenen Stopfen, insbesondere einem mit Dichtung (2) versehenen Schraubstopfen (1), in dessen Boden (8) ein Ventilsystem (3) zur Überdruckentlastung angeordnet ist, dadurch gekennzeichnet, daß der Hohlraum des Stopfens mit einem Katalysator (4) zur Rekombination von Wasserstoff und Luftsauerstoff angefüllt ist und mit einer gasdurchlassigen, mit dem oberen Stopfenrand verbundenen Abdeckung (5) verschlossen ist.

2. Sicherheitsvorrichtung nach Anspruch 1, dadurch gekennzeichnet, daß das Ventilsystem (3) aus einem pilzförmigen Ventileinsatz aus elastischem Material (6) besteht, dessen Stiel durch eine Bohrung im Stopfenboden (8) hindurchgeführt ist und unterhalb des

Stopfenbodens eine als spannungsaufbauender Anschlag ausgebildete Verdickung aufweist und dessen Hut auf der Oberseite des Stopfenbodens mindestens eine Gasdurchlaßöffnung (7) bedeckt, wobei der Abstand zwischen Verdickung und Hutansatz etwas kleiner ist als die Dicke des Stopfenbodens.

3. Sicherheitsvorrichtung nach Anspruch 1 oder 2, dadurch gekennzeichnet, daß zumindest die Oberseite des Stopfenbodens (8) mit einer gasdurchlässigen Wärmeschutzfolie (9) abgedeckt ist.

4. Sicherheitsvorrichtung nach den Ansprüchen 1-3, dadurch gekennzeichnet, daß der Stopfen (1) aus thermoplastischem Material und seine Abdeckung (5) aus metallischem Siebgewebe besteht, welches in den oberen Stopfenrand eingeschweißt ist.

5. Sicherheitsvorrichtung nach den Ansprüchen 1-4, dadurch gekennzeichnet, daß die Stopfenabdeckung von einer auf Abstand angebrachten Schutzhaube (10) gegen Regen- oder Spritzwasser umgriffen ist.

6. Sicherheitsvorrichtung nach den Ansprüchen 1-5, dadurch gekennzeichnet, daß der Katalysator aus geformtem Schüttgut besteht.

7. Sicherheitsvorrichtung nach den Ansprüchen 1-6, dadurch gekennzeichnet, daß der Katalysator aus einem gamma-Aluminiumoxid-Träger und einer darauf aufgebrachten Platingruppen-Metallkomponente, insbesondere aus Palladium und/oder Platin besteht.

8. Sicherheitsvorrichtung nach dem Anspruch 6 oder 7, dadurch gekennzeichnet, daß das gamma-Aluminiumoxid eine spezifische Oberfläche von 50-400, vorzugsweise 80-350, insbesondere ca. 250 $m^2/g$ hat.

## Claims

1. A safety device for packages which contain hydrogen-releasing pyrophoric metal catalyts, consisting of a hollow stopper which is open at the top, in particular a screw stopper (1) provided with a seal (2), a valve system (3) for relieving excess pressure being positioned in the bottom (8) of the stopper (1), characterised in that the cavity of the stopper is filled with a catalyst (4) for the recombination of hydrogen and atmospheric oxygen and is sealed with a gas-permeable cover (5) joined to the upper edge of the stopper.

2. A safety device according to claim 1, characterised in that the valve system (3) consists of a mushroom-shaped valve insert of elastic material (6), the shaft of which is guided through a bore in the bottom (8) of the stopper and has a thickening formed as a pressure build-up stop below the bottom of the stopper and the cap of which covers at least one gas passage opening (7) on the upper side of the stopper bottom, the spacing between the thickening and the cap attachement being slightly smaller than the thickness of the bottom of the stopper.

3. A safety device according to claim 1 or 2, characterised in that at least the upper side of the stopper bottom (8) is covered with a gas-permeable heat protection film (9).

4. A safety device according to claims 1 to 3, characterised in that the stopper (1) consists of thermoplastic material and its cover (5) consists of metallic screen cloth which is welded into the top edge of the stopper.

5. A safety device according to claims 1 to 4, characterised in that the stopper cover is encompassed by a hood (10) positioned at a spacing to protect against rain water or splashed water.

6. A safety device according to claims 1 to 5, characterised in that the catalyst consists of shaped bulk material.

7. A safety device according to claims 1 to 6, characterised in that the catalyst consists of a gamma-aluminium oxide carrier and a platinum group metal component applied thereon, and it consists in particular of palladium and/or platinum.

8. A safety device according to claim 6 or 7, characterised in that the gamma-aluminium oxide has a specific surface of from 50 to 400, preferably from 80 to 350, and in particular about 250 $m^2/g$.

## Revendications

1. Dispositif de sécurité pour des emballages contenant des catalyseurs métalliques pyrophores dégageant de l'hydrogène, constitué d'un bouchon creux, ouvert vers le haut, en particulier un bouchon à vis (1), pourvu d'un joint d'étanchéité (2), dans le fond (8) duquel est placé un système formant soupape (3), destiné à la décharge de la pression, dispositif caractérisé en ce que l'espace vide, prévu dans le bouchon, est rempli d'un catalyseur (4) assurant la recombinaison de l'hydrogène et de l'oxygène de l'air, et est fermé par un couvercle (5), perméable au gaz, relié avec le bord supérieur du bouchon.

2. Dispositif de sécurité suivant la revendication 1, caractérisé en ce que la soupape (3) est constituée d'une garniture en matière élastique (6) en forme de champignon, dont la tige passe dans une perforation du fond (8) du bouchon, et présente, en-dessous de ce fond (8) du bouchon, un renflement réalisé sous la forme d'une butée assurant la tension, son chapeau reposant sur la face supérieure de ce fond recouvrant au moins un orifice (7) de passage du gaz, la distance qui sépare le renflement de l'appendice formant chapeau étant un peu plus petite que l'épaisseur du fond du bouchon.

3. Dispositif suivant l'une des revendications 1 et 2, caractérisé en ce qu'au moins la face supérieure du fond (8) du bouchon est couverte d'une feuille (9) protectrice contre la chaleur, perméable aux gaz.

4. Dispositif de sécurité suivant l'une quelconque des revendications 1 à 3, caractérisé en ce que le bouchon (1) est fait en matière thermoplastique et que son recouvrement (5) est fait d'une toile métallique à tamis qui est soudée sur le bord supérieur du bouchon.

5. Dispositif de sécurité suivant l'une quelconque des revendications 1 à 4, caractérisé en ce que le recouvrement du bouchon est protégé contre la pluie ou les projections d'eau par un capot protecteur (10) monté à une certaine distance.

6. Dispositif de sécurité suivant l'une quelconque des revendications 1 à 5, caractérisé en ce que le catalyseur est constitué d'une matière moulée en vrac.

7. Dispositif de sécurité suivant l'une quelconque des revendications 1 à 6, caractérisé en ce que le catalyseur est constitué d'un support en oxyde d'aluminium gamma, sur lequel est déposé un composant métallique du groupe du platine, en particulier du palladium et/ou du platine.

8. Dispositif suivant l'une des revendications 6 et 7, caractérisé en ce que l'oxyde d'aluminium gamma présente une surface spécifique de 50 à 400, de préférence 80 à 350, ou mieux d'environ 250 $m^2/g$.

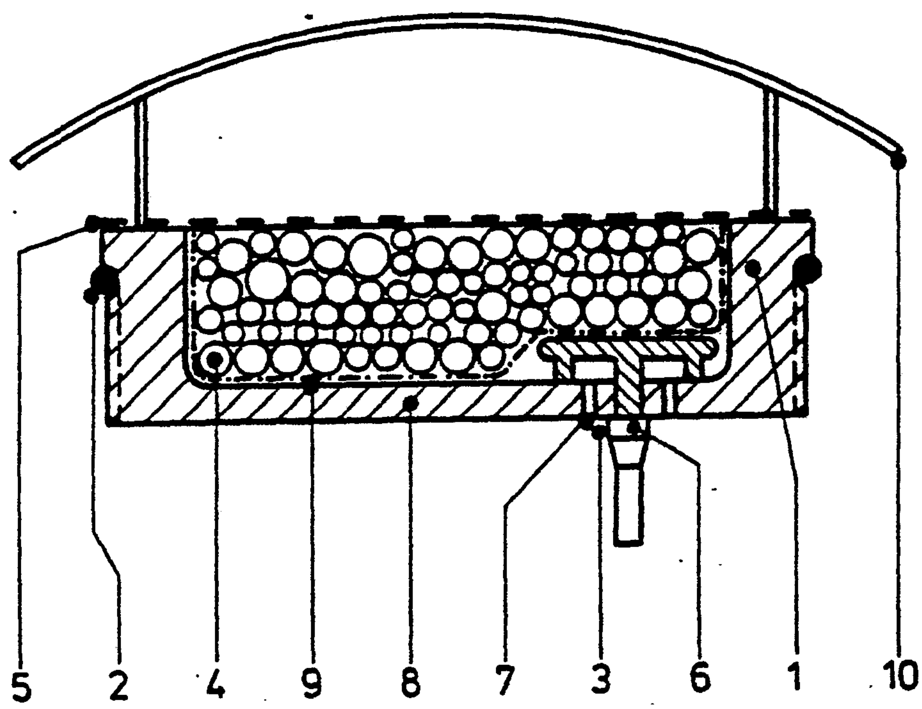


Abb.